(19) Europäisches Patentamt European Patent Office Office européen des brevets

(11) **EP 2 550 229 B1**

(12) **EUROPÄISCHE PATENTSCHRIFT**

(45) Veröffentlichungstag und Bekanntmachung des Hinweises auf die Patenterteilung:
**22.04.2015 Patentblatt 2015/17**

(21) Anmeldenummer: **11714485.7**

(22) Anmeldetag: **17.03.2011**

(51) Int Cl.:
**B67B 3/20** (2006.01) **B67B 3/22** (2006.01)

(86) Internationale Anmeldenummer:
**PCT/EP2011/001327**

(87) Internationale Veröffentlichungsnummer:
**WO 2011/116902 (29.09.2011 Gazette 2011/39)**

(54) **VORRICHTUNG UND VERFAHREN ZUR ROTATORISCHEN AUSRICHTUNG EINES TUBENKOPFES RELATIV ZU EINEM TUBENKÖRPER**

DEVICE AND METHOD FOR THE ROTATIONAL ORIENTATION OF A TUBE HEAD RELATIVE TO A TUBE BODY

DISPOSITIF ET PROCEDE POUR L'ORIENTATION PAR ROTATION D'UN SOMMET DE TUBE PAR RAPPORT A UN CORPS DE TUBE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010 DE 102010012858**

(43) Veröffentlichungstag der Anmeldung:
**30.01.2013 Patentblatt 2013/05**

(73) Patentinhaber: **PackSys Global (Switzerland) Ltd. 8630 Rüti (CH)**

(72) Erfinder: **SCHULTHESS, Oskar
8645 Jona (CH)**

(74) Vertreter: **Behrmann, Niels et al
Behrmann Wagner Partnerschaftsgesellschaft mbB
Patentanwälte
Hegau-Tower
Maggistraße 5 (10. OG)
78224 Singen (DE)**

(56) Entgegenhaltungen:
**DE-A1- 19 540 545      JP-A- 2000 327 086
JP-A- 2009 179 342      US-A- 5 095 681**

• **22: "Sampling and Filtering of Contionous Measurements" In: Dale Seborg, Tom Edgar, and Duncan Mellichamp.: "Process Dynamics and Control", 1. Januar 1989 (1989-01-01), Wiley, New Jersey, U.S.A, XP000002656647, ISBN: 0471863890 Seite 530 - Seite 548**

**Beschreibung**

Die vorliegende Erfindung betrifft eine Vorrichtung zur automatisierten rotatorischen Ausrichtung eines Tubenkopfes relativ zu einem Tubenkörper nach dem Oberbegriff des Hauptanspruchs sowie ein Verfahren zur rotatorischen Ausrichtung, insbesondere zum Betreiben einer solchen Vorrichtung.

Im Stand der Technik, insbesondere im Zusammenhang mit der Tubenfertigung im Nahrungsmittel- oder Kosmetikbereich, besteht das Bedürfnis, einen (typischerweise in der Art einer Verschlusskappe vorgesehenen) Tubenkopf in einer vorbestimmten Drehrichtung zum (querschnittlich flachen bzw. ovalen) Tubenkörper auszurichten. Ein typisches Beispiel hierfür ist etwa das Ausrichten eines am Tubenkopf vorgesehenen Griffabschnitts zu einer Bedruckung auf der Flachseite des zugehörigen Tubenkörpers, wobei der gewünschte positive optische Eindruck dann erzielt wird, wenn dieser Griffabschnitt etwa mittig auf das Schriftbild ausgerichtetjst. Hierfür ist es notwenig, vor dem (typischerweise automatisierten) Aufsetzen des Tubenkopfes auf den Tubenkörper eine Ausrichtung des Tubenkopfes in der gewünschten Weise vorzunehmen.

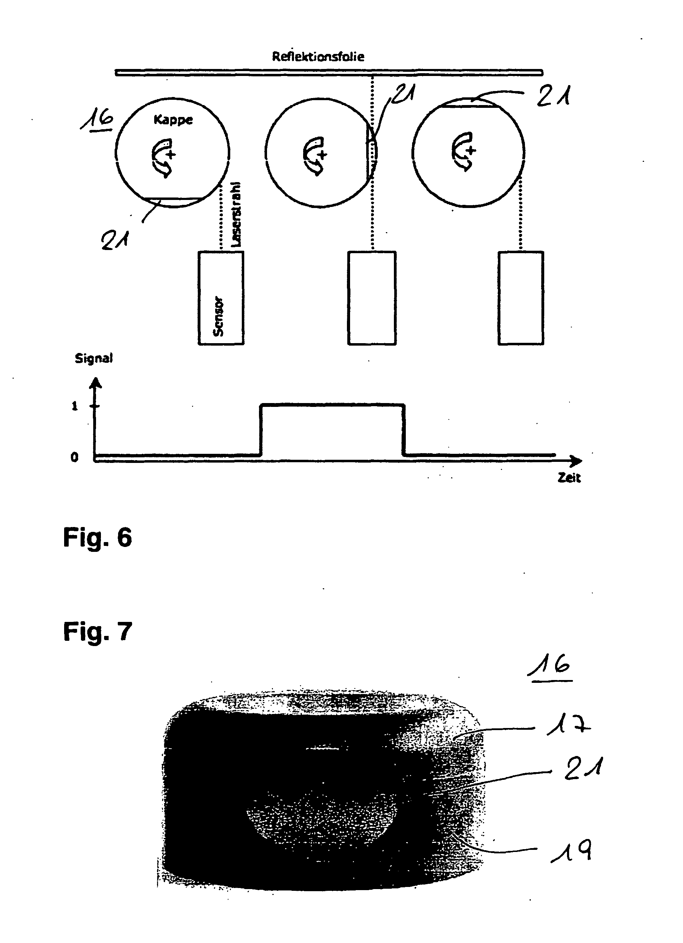

Aus dem Stand der Technik ist es dabei bekannt, lichtschrankenbasierte Lösungen einzusetzen. Am Beispiel der Fig. 6 zum Stand der Technik wird dieses Vorgehen erläutert. Ein bestimmungsgemäß rotatorisch auszurichtender zweigeteilter Tubenkopf 16 (typischerweise mit einem über ein Folienscharnier angebundenen Verschlussdeckel 17, wie in Fig. 7 gezeigt) weist eine zylindrische Grundkontur auf und bildet einen Angriffsabschnitt 21 für die manuelle Betätigung aus, welcher in der Draufsicht der Fig. 6 als Abflachung erscheint.

Diese Abweichung von einer reinen Rotationssymmetrie macht sich die bekannte Technologie dadurch zu nutze, dass in der Art eines Positionsindikators dieser Abschnitt mittels eines Laserstrahls (innerhalb eines optischen Lichtschrankenaufbaus) erfasst wird und so die korrekte Drehposition festgestellt werden kann. Die Fig. 6 verdeutlicht einen idealisierten Signalverlauf dieses Lichtschrankensensors.

In der weiteren Verarbeitung sieht dann der Stand der Technik vor, dass ein Abgleich der so gewonnenen Tubenkopfposition mit der Position des Tubenkörpers erfolgt, in geeigneter Weise ein die ausrichtende Drehbewegung bewirkender Servomotor angesteuert wird und nachfolgend in ansonsten bekannter Art der Tubenkopf (als Kappe) auf den Tubenkörper gepresst wird.

Allerdings ist in der Produktionspraxis selten ein derart idealisierter Signalverlauf zu erhalten, hinzu kommt, dass verschiedene Tubentypen oftmals auch verschiedene Anforderungen an die Erfassung eines Positionsindikators stellen (so ist dieser oftmals nicht oder nur schlecht in der Art der in Fig. 6 gezeigten Abflachung vorhanden, sondern etwa als schwierig detektierbares Scharnier od.dgl.). Auch reagiert die bekannte Technologie oftmals empfindlich auf (beabsichtigte oder unbeabsichtigte) Abweichungen von einer idealen Umfangsform; so können schlecht zentrierte oder mit Toleranz hergestellte Kappen zu fehlerhafter Detektion führen, ebenso wie eine ovale Querschnittsform eines Tubenkopfes zu Schwierigkeiten einer genauer Positionsermittlung in der oben beschriebenen Vorgehensweise führt. Entsprechend ist daher bei bekannten Vorgehensweisen erhöhter Einstell-, Kalibrierungs- und Auswerteaufwand notwendig, mit den damit verbundenen Nachteilen für schnelle Taktzeiten, kurze Umrüstzeiten oder geringe Fehler- bzw. Ausschussquoten.

Aus der JP 2000 327086 A ist eine Vorrichtung mit den Merkmalen des Oberbegriffs des Hauptanspruchs bekannt. Zum weiteren Stand der Technik als Hintergrund ist zu verweisen auf CH 22:"Sampling and Filtering of Contionous Measurements" In: Dale Seborg, Tom Edgar, and Duncan Mellichamp.: "Process Dynamics and Control" verwiesen.

Aufgabe der vorliegenden Erfindung ist es daher, eine Vorrichtung zur rotatorischen Ausrichtung eines Tubenkopfes relativ zu einem Tubenkörper im Hinblick auf eine vereinfachte und zuverlässigere Positionserfassung eines Tubenkopfes zu verbessern, mit dem Zweck, als Ergebnis der Positionserfassung ein einfacheres und schnelleres Zusammenführen von Tubenkopf und Tubenkörper zu ermöglichen. Auch soll ein Wechsel verschiedener Tubenkopftypen einfacher und ohne erhöhten Kalibrierungsaufwand möglich sein, und es ist generell eine verbesserte Fehler- und Ausschussquote in der automatisierten Tubenfertigung, insbesondere im automatisierten, ausgerichteten Zusammenführen von Tubenkopf und Tubenkörper, zu erreichen.

Die Aufgabe wird durch die Vorrichtung mit den Merkmalen des Hauptanspruchs sowie das Verfahren mit den Merkmalen des unabhängigen Patentanspruchs 8 gelöst. Vorteilhafte Weiterbildungen der Erfindung sind in den Unteransprüchen beschrieben.

In erfindungsgemäß vorteilhafter Weise sind die Sensormittel zum Erfassen einer aktuellen Drehposition des Tubenkopfes so ausgebildet, dass diese ein einer umlaufenden Drehbewegung des Tubenkopfes entsprechendes Erfassungssignal ausgeben und dieses Erfassungssignal nachfolgend mit einem Referenzsignal korreliert wird. Aus diesem Korrelationsergebnis lässt sich dann in sehr zuverlässiger und störungsinsensitiver Weise eine absolute Drehposition des gewünschten Positionsindikators (also typischerweise des Griffabschnitts oder eines Scharniers) ermitteln, womit dann wiederum die exakte nachfolgende Ausrichtung per Drehbewegung erfolgen kann.

Dabei ist es im Rahmen der Erfindung vorgesehen, das Referenzsignal (etwa im Rahmen derselben apparativen Anordnung) auf einem geeignet vorbestimmt positionierten bzw. in seiner Relativposition zu einem Tubenkörper feststehenden Referenzobjekt (etwa einem idealisierten Tubenkopf) zu ermitteln. Ergänzend ist es möglich, auf ein vorbestimmtes Referenzsignal (etwa existierend als vorbestimmter Datensatz in geeignet elektronisch gespeicherter Form) zuzugreifen, wobei es hier insbesondere auch vorteilhaft ist, für eine Vielzahl von verschiedenen, jeweils an einer Anlage einzusetzenden bzw. zu positionierenden Tubenkopftypen die jeweiligen Datensätze zum schnellen Zugriff vorzuhalten.

Im Rahmen der erfindungsgemäßen Lösung wird zwar in der Art einer bevorzugten Ausführungsform auf das Durchführen einer Drehbewegung am Tubenkopf abgestellt. Gleichermaßen ist es jedoch von der Erfindung umfasst und möglich, die erfindungsgemäße Dreh-Relativbewegung zwischen Tubenkopf und Tubenkörper dadurch zu realisieren, dass bei rotatorisch fixem Tubenkopf der dazu auszurichtende Tubenkörper in die geeignete Position gedreht wird. Insoweit ist die gesamte vorliegende Beschreibung als analog auf diese mögliche Erfindungskonstellation anzuwenden bzw. geeignet anzupassen.

Im Rahmen der Efindung wird, das erfindungsgemäß erzeugte Erfassungssignal als zeitabhängiges Signal aufgenommen, wobei der Zeitverlauf der umlaufenden Drehbewegung entspricht. Die Sensormittel selbst können, idealerweise entsprechend den Detektionserfordernissen für einen jeweiligen Tubenkopf, beliebig gewählt sein und sowohl optische Sensoren (also etwa Lichtschranken, Bildaufnahmesensoren oder andere), induktiv oder kapazitiv wirkende Sensoren oder Ultraschallsensoren sein, solange ein Positionsindikator am Tubenkopf tauglich erfasst werden kann.

Das erfindungsgemäß aufgezeichnete Erfassungssignal als kontinuierliches Signal (bzw. als Abfolge geeigneter diskreter bzw. geeignet quantifizierter Einzelsignale) wird dann in ansonsten bekannter Weise mit dem Referenzsignal korreliert, wobei das Ergebnis der Korrelation ein (typischerweise entlang des Zeitverlaufs) funktionaler Zusammenhang ist, der ein Funktionsmaximum ausbildet. Dieses Funktionsmaximum und dessen Position (etwa im zeitlichen Verlauf) ist dann Grundlage für das Feststellen der gesuchten relativen Drehposition des zu vermessenden Tubenkopfes und Basis für das nachfolgende Dreh-Positionieren des Tubenkopfes relativ zum Tubenkörper in die gewünschte Ausrichteposition. Dabei ist der Begriff "Funktionsmaximum" nicht als beschränkend für die Erfindung zu verstehen, vielmehr ist es gleichermaßen möglich, einen anderen, für die Korrelation charakteristischen Kennwert bzw. eine Größe entlang der Korrelationsfunktion zu identifizieren, wie etwa ein Korrelationsminimum, aus welchem sich ebenso dann das gewünschte Steuersignal für die vorzunehmende Drehbewegung ableiten lässt. Dabei ist eine "Korrelation" im Rahmen der vorliegenden Erfindung nicht notwendigerweise eine Operation, die eine vollständige Messkurve (entsprechend einem Umlauf) verrechnet, vielmehr kann auch ein (geeignet ausgewählter) Ausschnitt dieser erfindungsgemäßen Korrelation zugrundeliegen.

Während es einerseits im Rahmen der Erfindung bevorzugt ist, das efindungsgemäße Korrelieren auf der Basis einer (begrenzten) Anzahl diskreter Einzelwerte des Erfassungssignals (bzw. des Referenzsignals) vorzunehmen, wobei zum Erreichen einer gewünschten Positionsgenauigkeit im Rahmen einer bevorzugter Weiterbildung der Erfindung mindestens 10 Einzelwerte korreliert werden sollten, ist es gleichermaßen von der Erfindung umfasst, das Korrelieren auf der Basis analoger Signalverläufe vorzunehmen. Generell ist es ein Optimierungsproblem zwischen dem erforderlichen Rechenaufwand (der wiederum abhängig ist von der Anzahl der korrelierten Einzelsignale bzw. der Auflösung der zu betrachtenden Funktionen) und der gewünschten Auflösungsgenauigkeit in Drehrichtung, um eine möglichst hohe beabsichtigte Prozessgeschwindigkeit bei gleichzeitig möglichst genauer Positionsdetektion zu erreichen.

Im Ergebnis ermöglicht die vorliegende Erfindung in überraschend einfacher und zuverlässiger Form das Realisieren einer Drehpositionserfassung eines Tubenkopfes (bzw. eines Tubenkörpers), mit der Möglichkeit, ein nachfolgendes maschinelles Zusammenführen des Tubenkopfes mit einem Tubenkörper in einer ausgerichteten Weise schnell, mit geringer Ausschussrate und flexibel bewirken zu können.

Weitere Vorteile, Merkmale und Einzelheiten der Erfindung ergeben sich aus der nachfolgende Beschreibung bevorzugter Ausführungsbeispiele sowie anhand der Zeichnungen; diese zeigen in:

Fig. 1: ein schematisches Blockschaltbild der Vorrichtung zur automatischen rotatorischen Ausrichtung eines Tubenkopfes relativ zu einem Tubenkörper im Rahmen eines Maschinenkontexts gemäß einer ersten bevorzugten Ausführungsform der Erfindung;

Fig. 2: ein Schemadiagramm zum Verdeutlichen des erfindungsgemäßen Erfassens einer aktuellen Drehposition eines Tubenkopfes durch die Sensormittel in Form eines kontinuierlich abgetasteten Umlaufs;

Fig. 3a, Fig. 3b: tabellarisch aufgelistete Messwerte eines vereinfachten Beispiels sowie ein zugehöriges Diagramm im Zeitablauf für eine Referenzkurve eines Referenz-Tubenkopfes (3a) bzw. eines gemessenen idealisierten Tubenkopfes (3b);

Fig. 4: eine Auflistung der aus einer Korrelation der Messreihen gemäß Fig. 3a, 3b ermittelten Korrelationskoeffizienten sowie das darin erkennbare Korrelationsmaximum;

| Fig. 5a, Fig. 5b: | Modifikationen der Datenreihen gemäß Fig. 3b mit Messfehlern bzw. vom idealen Messwertverlauf abweichenden Messwerten und deren Einfluss auf die Korrelation zum Verdeutlichen der Fehlertoleranz der vorliegenden Erfindung; |
| Fig. 6: | eine Schemadarstellung zum Verdeutlichen einer Lichtschranken-Erfassung zur Tubenkopf-Positionsbestimmung aus dem Stand der Technik und |
| Fig. 7: | eine Darstellung eines Tubenkopfes mit Eingriffsbereich als Positionsindikator des Tubenkopfes. |

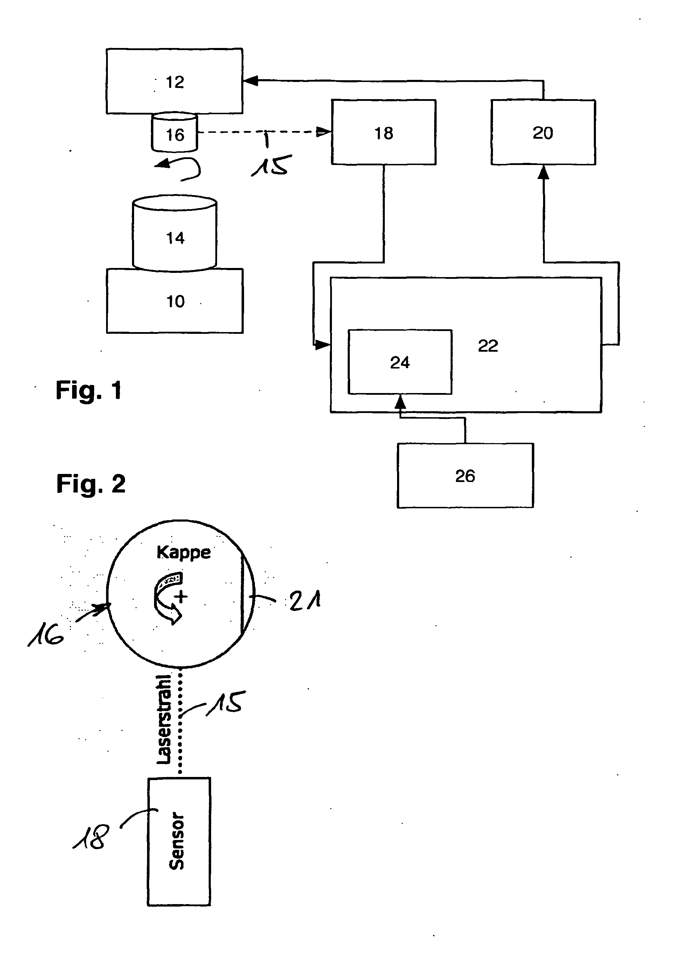

Das schematische Blockschaltbild der Fig. 1 verdeutlicht die wesentliche Funktionskomponenten einer Vorrichtung zur automatischen rotatorischen Ausrichtung eines Tubenkopfes relativ zu einem feststehenden Tubenkörper gemäß einem ersten bevorzugten Ausführungsbeispiel der vorliegenden Erfindung.

Schematisch verdeutlich dabei der Funktionsblock 10 eine (statische) Halterung für einen entsprechend rotatorisch positionsfest gehaltenen Tubenkörper. Rotatorisch beweglich relativ zu diesem gehalten ist ein Tubenkopf 16, welcher in einer geeigneten Ausrichte- und Antriebseinheit 12 als Positionierungsmittel gehalten ist und so um eine (vertikale) Drehachse gedreht werden kann, dass der Tubenkopf 16 in einer vorbestimmten Drehposition zum Tubenkörper 14 positioniert und nachfolgend in dieser Position aufgesetzt werden kann. In der näher in Fig. 7 gezeigten Art und Weise ist im gezeigten Ausführungsbeispiel der Tubenkopf zweiteilig bestehend aus Deckelabschnitt 17 und Auslassabschnitt 19 mit zwischenliegendem (nicht gezeigten) Folienscharnier gefertigt; ein Griffabschnitt 21 zum Öffnen des Deckels dient gleichermaßen als Positionsindikator.

Die Positionierungsmittel 12, im Wesentlichen aufweisend einen geeignet geschalteten rotatorischen Drehantrieb (nicht gezeigt), sind ausgebildet, den Tubenkopf 16 (Kappe) in der in Fig. 1 gezeigten Weise in eine umlaufende Rotation zu versetzen, wobei die seitliche Kontur (Mantel) von einer auf Laserbasis wirkenden Sensoreinheit 18 kontinuierlich abgetastet wird.

Das entsprechend digitalisierte bzw. quantifizierte Signal des Sensors 18 (gewonnen aus dem kontinuierlich am Mantel des Tubenkopfes reflektierten Laserstrahl 15) wird dann von einer zentralen Steuer- und Verarbeitungseinheit 22 verarbeitet, insbesondere in nachfolgend hier noch zu beschreibender Weise mit Referenzdaten korreliert, wobei aus dem Ergebnis dieser Korrelation dann ein Steuersignal für Antriebs- bzw. Treibermittel 20 gewonnen wird, die wiederum die Positionierungsmittel 12 in die gewünschte Drehposition, wie oben erläutert, versetzen.

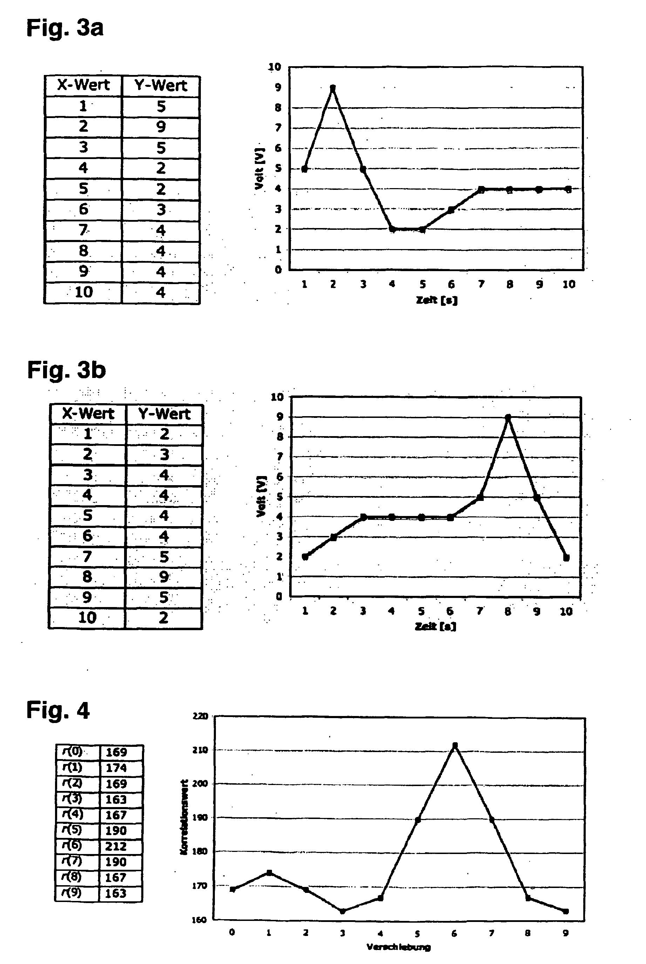

Diese Vorgehensweise soll nachfolgend anhand der exemplarisch gewählten und zu Erläuterungszwecken vereinfachten Signaltabellen und Zeitablaufdiagramme der Fig. 3a, 3b und 4 erläutert werden.

So entspricht etwa der Signal-Pegelverlauf "Y-Wert" der Fig. 3b, aufgetragen über der Zeit (als X-Wert und entsprechend einem vollständigen Umlauf des Tubenkopfes (Kappe) 16) einem typischen Signalverlauf, wie er bei einer Kappe der in Fig. 7 gezeigten Art auftritt: Der Öffnungsabschnitt 21 erzeugt das Signalmaximum (Pegel V) zum Zeitpunkt 8; die außerhalb dieses Bereichs 21 liegenden Messwerte weisen demgegenüber eine deutlich niedrigere Amplitude (Pegel zwischen 2 und 4V) auf.

Der Signalverlauf der Fig. 3a, im vorliegenden Fall herangezogen als Referenz-Signalverlauf und gewonnen durch das Abtasten eines Referenzmusters (bzw. eines idealisierten und in seiner Drehposition bekannten Körpers) entspricht im vorliegenden Fall im Hinblick auf den Pegelverlauf exakt dem Signalverlauf der Fig. 3b, lediglich verschoben um sechs Zeitwerte (d.h. das Amplitudenmaximum des Y-Werts in Fig. 3a liegt zum Zeitpunkt t = 2, damit sechs Zeiteinheiten vor dem tatsächlich gemessenen Wert der Fig. 3b).

In erfindungsgemäß günstiger Weise wird nunmehr auf die in der gezeigten Weise numerisch vorliegenden (da von der Sensoreinheit 18 gewonnen und geeignet quantifizierten) Daten eine Korrelationsrechnung nach dem Ansatz der sogenannten diskreten Korrelation durchgeführt, wobei für jeden der Zeitpunkte n = 0 bis 10 ein Korrelationskoeffizient r(n) wie folgt errechnet wird:

$$r(n) = \Sigma\ x(m)\ y(m+n),\ \text{summiert über } m = -\infty \text{ bis } +\infty$$

hier: m = 1 bis 10 (Anzahl der Messwerte)
wobei n = 0...9, entsprechend den Zeitpunkten 1 bis 10 (Fig. 3a bzw. 3b)
und
x() die erste Messreihe (etwa entsprechend Fig. 3a) und y() die zweite Messreihe (Fig. 3b) darstellen.

Diese Korrelationsrechnung ergibt die in Fig. 4 tabellarisch für die Werte n = 0 bis n = 9 aufgelisteten Korrelationskoeffizienten sowie deren graphische Darstellung.

Es zeigt sich, dass für n = 6 der Verlauf der Korrelationswerte (Fig. 4) ein deutlich erkennbares Maximum aufweist, mit der unmittelbar erkennbaren bzw. ablesbaren Bedeutung, dass (vgl. die Kurvenverläufe der Fig. 3a relativ zu Fig. 3b) die größte Übereinstimmung zwischen den Kurvenverläufen vorhanden ist, wenn die zu vergleichenden Kurven (Fig. 3a und 3b) um sechs Zeiteinheiten verschoben sind; die würde dann gerade zur Identität in diesem idealisierten Fall führen.

Insoweit bildet im vorliegenden Fall das erkennbare Korrelationsmaximum der Fig. 4 einen Hinweis darauf aus, wie mittels der Einheiten 12 bzw. 20 der Tubenkopf 16 relativ zum fixen Tubenkörper 14 zu verdrehen ist, um die gewünschte Drehpositionierung zu erhalten.

Die gezeigte Beispielrechnung bzw. die oben angegebene Formel ist dabei als lediglich exemplarisch zu betrachten; von der Erfindung umfasst sind sämtliche Verfahren zum Ermitteln einer Korrelation, welche den Grad der Übereinstimmung bzw. eines Zusammenhangs zwischen den zu vergleichenden Werteverläufen (über den Zeitverlauf als stellvertretend für etwa eine vollständige Umdrehung) abbilden, wobei neben Korrelationsverfahren insbesondere auch sonstige Verfahren zur (komplexen) Mustererkennung, bezogen auf das Gesamtsignal oder ein Teilsignal, od. dgl. in Betracht kommen. Auch ist im vorliegenden Fall die Wertezahl 10 (als Auflösung für eine vollständige Umdrehung im dargestellten Zeitverlauf) als stark vereinfacht und exemplarisch zu betrachten; im bevorzugten Regelfall dürften mindestens 100 Einzelwerte um einen Tubenkopfumfang herum zu ermitteln und dann entsprechend zu korrelieren sein; bevorzugte Ausführungsformen setzen dabei eine Zeit von Einzelwerten > 200, ideal auch > 300 an, um eine möglichst genaue und fehler-unempfindliche Positionsermittlung zu ermöglichen.

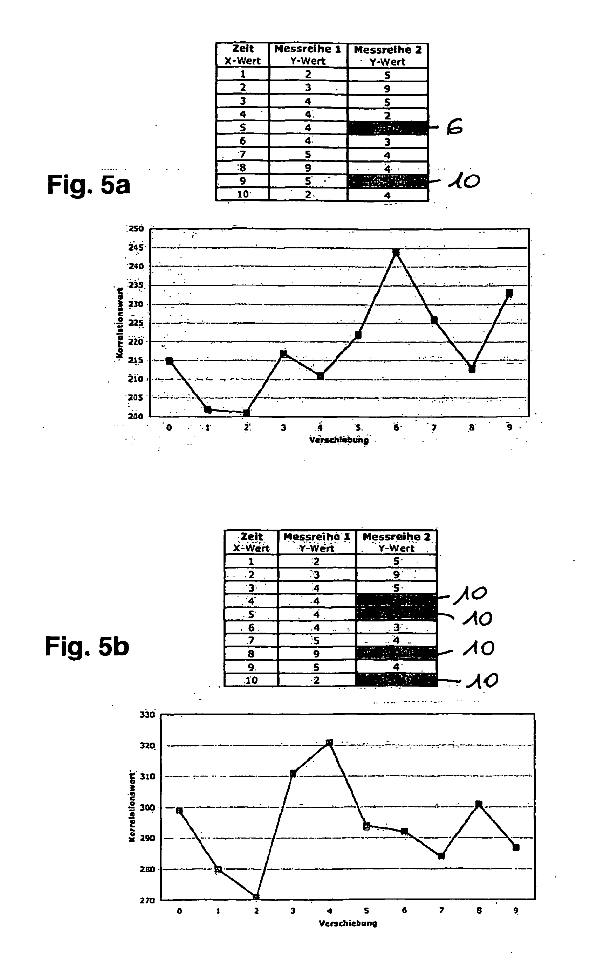

In diesem Zusammenhang und unter Verweis auf die Beispiele 5a und 5b wird verdeutlicht, wie stark die Fehlertoleranz der vorliegenden Vorgehensweise zur Ermittlung eines rotatorischen Positionsversatzes mittels Korrelation der jeweiligen Signalverläufe ist: In Fig. 5a wurde dabei, und abweichend vom idealisierten Messwertverlauf der Fig. 3b, gezielt der fünfte und der neunte Messwert (entsprechend den Zeitpunkten 5 und 9) verfälscht (die Messreihe 1 entspricht insoweit nach wie vor dem idealisierten Werteverlauf Y-Wert in Fig. 3b), wobei die zugehörige Graphik den Verlauf des Korrelationswertes r(n), analog zu Fig. 4, anzeigt. Es ergibt sich, dass selbst bei diesen zwei deutlich vom idealisierten Verlauf abweichenden Werten an den Zeitpositionen 5 und 9 nach wie vor das Korrelationsmaximum zum Zeitpunkt 6 klar und eindeutig erkennbar ist, so dass selbst bei diesen problematischen Bedingungen eine eindeutige und korrekte Relativpositionierung der Ansteuerung der Einheit 12 erfolgt. Fehlerhaft wird diese Ermittlung erst, wenn, vgl. Fig. 5b, welche insoweit eine Toleranzgrenze aufzeigt, vier der zehn Messwerte (hier die Zeitposition 4, 5, 8, 10) deutlich von den idealen Messwerten abweichen. Die Erwartung besteht jedoch, dass im tatsächlichen Betrieb bei typischerweise mehr als 100, bevorzugt mehr als 300 quantifizierten Einzelwerten um den Tubenkopfumfang herum auch hier eine korrekte Ermittlung eines Korrelationsmaximums erfolgen kann.

Die obige Betrachtung verdeutlicht damit, dass selbst bei vergleichsweise geringer (numerischer) Auflösung bzw. großen Messwertabweichungen die erfindungsgemäße Vorgehensweise mittels Korrelation zu guten Ergebnissen und insbesondere in der erfindungsgemäß vorteilhaften Weise zu einem hohen Ausmaß an Positionssicherheit und damit hoher Fertigungsqualität führt. Dabei ist, wie bereits erläutert, offensichtlich, dass eine Erhöhung der Einzelmessungen zwar einerseits den Verarbeitungsaufwand für die Korrelation vergrößert, andererseits jedoch eine weiter erhöhte Fehlertoleranz und Positionsgenauigkeit erzielt werden kann. Umgekehrt wird durch diese Betrachtung deutlich, dass etwa die aus dem Stand der Technik gemäß Fig. 6 beschriebene Vorgehensweise mit den vorhandenen Schwächen signifikant verbessert wird und insoweit zu erwarten steht, dass mit der vorliegenden Erfindung die Montageprozesse zweier Tubenpartner, auch unter widrigen Bedingungen bzw. bei hohen Toleranzanforderungen, mit hoher Qualität durchgeführt werden können.

Während die vorbeschriebene erste Ausführungsform als Vorrichtung beschrieben wurde, ist es gleichermaßen als Darlegung eines erfindungsgemäß beanspruchten Verfahrens zu verstehen, wie durch Betreiben der Anordnung gemäß Fig. 1 eine Relativposition von Tubenkopf und Tubenkörper als aufeinander auszurichtende Partner erfolgt.

Dabei ist, abweichend vom vorbeschriebenen Ausführungsbeispiel, die vorliegende Erfindung nicht auf das aktive Verdrehen des Tubenkopfes relativ zum (feststehenden) Tubenkörper beschränkt. Vielmehr ist es gleichermaßen von der vorliegenden Erfindung umfasst, in ansonsten bekannter und einfach zu realisierender Weise einen Tubenkopf vorbestimmt zu positionieren, den Tubenkörper in seiner Relativposition durch geeignete Sensormittel zu erfassen und zu bewegen und so ebenso die gewünschte, rotatorisch positionsgenaue Ausrichtung der Partner zueinander zu bewirken.

Dabei eignet sich etwa günstig eine auf einen Tubenkörper vorhandene Markierung für eine solche umlaufend-analoge Messung, ebenso wie etwa ein möglicherweise bereits vorhandenes Etikett od.dgl. Markierung, welche zum Ermitteln einer aktuellen Tubenposition erfasst und in der vorbeschriebenen Weise digitalisiert abgespeichert werden kann, um nachfolgend mit einem Referenzsignal korreliert zu werden.

**Patentansprüche**

1. Vorrichtung zur automatischen rotatorischen Ausrichtung eines Tubenkopfes (16) relativ zu einem bevorzugt feststehenden Tubenkörper (14),

mit Sensormitteln (18) zum Erfassen einer aktuellen Drehposition des einen Positionsindikator (21) aufweisenden Tubenkopfes oder Tubenkörpers,
und mit den Sensormitteln zusammenwirkenden Positionierungsmitteln (12, 20), die zum Bewirken einer Drehbewegung des Tubenkopfes oder des Tubenkörpers als Reaktion auf ein Steuersignal einer Steuereinheit (22) ausgebildet sind,
**dadurch gekennzeichnet, dass** die Sensormittel zum Erzeugen eines einer im Zeitverlauf umlaufenden Drehbewegung des Tubenkopfes oder Tubenkörpers entsprechenden Erfassungssignals als quantifizierte Einzelmesswerte um den Tubenkopfumfang herum ausgebildet sind
und die Steuereinheit Mittel zum Korrelieren (24) des Erfassungssignals entlang des Zeitverlaufs mit einem Referenzsignal und zum Erzeugen eines Steuersignals aus einem einem Grad der Korrelation entsprechenden Kennwert, insbesondere einem Korrelationsmaximum oder Korrelationsminimum, für die Positionierungsmittel aufweist,
und wobei
die Sensormittel zum Erzeugen des Referenzsignals mittels eines in einer vorbestimmten Drehposition vorgesehenen Referenzkörpers, insbesondere Referenz-Tubenkopfes, ausgebildet sind und das Referenzsignal als vorbestimmter Signalverlauf in elektronisch gespeicherter Form vorliegt.

2. Vorrichtung nach Anspruch 1, **dadurch gekennzeichnet, dass** die Sensormittel einen optisch oder kapazitiv wirkenden Sensor und/oder einen Ultraschallsensor aufweisen und zum Erzeugen des Erfassungssignals über einen der umlaufenden Drehbewegung entsprechenden Zeitverlauf ausgebildet sind.

3. Vorrichtung nach Anspruch 1 oder 2, **dadurch gekennzeichnet, dass** die Sensormittel zum Digitalisieren und nachfolgenden Speichern des Erfassungssignals als Abfolge quantifizierter Einzelsignale ausgebildet sind.

4. Vorrichtung nach einem der Ansprüche 1 bis 3, **dadurch gekennzeichnet, dass** die Sensormittel so ausgebildet sind, dass entlang des einer umlaufenden Drehbewegung des Tubenkopfes entsprechenden Zeitverlaufs mindestens 100, bevorzugt mindestens 300, Einzelsignale des Erfassungssignals als Grundlage für das Korrelieren erzeugt werden.

5. Vorrichtung nach einem der Ansprüche 1 bis 4, **dadurch gekennzeichnet, dass** die Mittel zum Korrelieren zum bevorzugt numerischen Ermitteln einer Korrelationsfunktion des Erfassungssignals mit dem Referenzsignal sowie zum Ermitteln eines die Korrelation beschreibenden Kennwerts, insbesondere Funktionsmaximums oder Funktionsminimums, aus der Korrelationsfunktion ausgebildet sind.

6. Vorrichtung nach Anspruch 5, **dadurch gekennzeichnet, dass** die Steuereinheit so ausgebildet ist, dass eine Position des Funktionsmaximums bzw. Funktionsminimums im Zeitverlauf das Steuersignal für die Drehbewegung des Tubenkopfes oder Tubenkörpers bestimmt.

7. Vorrichtung nach einem der Ansprüche 1 bis 6, **dadurch gekennzeichnet, dass** das Referenzsignal spezifisch für mindestens einen Tubenkopftyp vorliegt.

8. Verfahren zum rotatorischen Ausrichten eines Tubenkopfes relativ zu einem Tubenkörper, insbesondere Verfahren zum Betreiben der Vorrichtung nach einem der Ansprüche 1 bis 7, mit den Schritten:

- Erfassen einer Drehposition des Tubenkopfes relativ zum Tubenkörper und
- Durchführen einer Relativdrehung des Tubenkopfes zum Tubenkörper in Abhängigkeit von der erfassten Drehposition,
wobei das Erfassen der Drehposition das Erzeugen eines einer umlaufenden Drehbewegung des Tubenkopfes oder Tubenkörpers entsprechenden analogen oder digitalen Erfassungssignals über einen der umlaufenden Drehbewegung entsprechenden Zeitverlauf aufweist, **dadurch gekennzeichnet, dass** das Erfassungssignal quantifizierte Einzelmesswerte umfasst und mit einem vorbestimmten Referenzsignal entlang des Zeitverlaufs korreliert wird
und die Drehposition aus einem die Korrelationsbeschreibenden Kennwert, insbesondere Korrelationsmaximum oder Korrelationsminimum der Korrelation, bestimmt wird, wobei das Referenzsignal mittels eines bevorzugt in einer vorbestimmten Drehposition vorgesehenen Referenzkörpers erzeugt und elektronisch abgelegt wird.

**Claims**

1. A device for the automatic rotational orientation of a tube head (16) relative to a preferably stationary tube body (14), with sensor means (18) for detecting a current rotated position of the tube head or tube body having a position indicator (21),
and with positioning means (12, 20) cooperating with the sensor means, which positioning means are configured to bring about a rotary movement of the tube head or of the tube body as a reaction to a control signal of a control unit (22),
**characterized in that** the sensor means are configured to generate a detection signal corresponding to a rotary movement of the tube head or tube body rotating over time as quantified individual measured values around the circumference of the tube
and the control unit has means for correlating (24) the detection signal along the course of time with a reference signal and for generating a control signal from a characteristic value corresponding to a degree of correlation, in particular a maximum correlation or minimum correlation, for the positioning means,
and wherein
the sensor means are configured for generating the reference signal by means of a reference body provided in a predetermined rotated position, in particular of a reference tube head, and the reference signal is present in electronically stored form as a predetermined signal sequence.

2. The device according to claim 1, **characterized in that** the sensor means have an optically acting or capacitively acting sensor and/or an ultrasound sensor and are configured for generating the detection signal over a course of time corresponding to the rotating rotary movement.

3. The device according to claim 1 or 2, **characterized in that** the sensor means are configured for digitizing and subsequently storing the detection signal as a sequence of quantified individual signals.

4. The device according to one of claims 1 to 3, **characterized in that** the sensor means are configured so that along the course of time corresponding to one rotating rotary movement of the tube head at least 100, preferably at least 300, individual signals of the detection signal are generated as a basis for the correlation.

5. The device according to one of claims 1 to 4, **characterized in that** the means for correlating are configured for the preferably numerical determining of a correlation function of the detection signal with the reference signal and for determining a characteristic value describing the correlation, in particular a functional maximum or functional minimum, from the correlation function.

6. The device according to claim 5, **characterized in that** the control unit is configured so that a position of the functional maximum or respectively functional minimum determines over time the control signal for the rotary movement of the tube head or tube body.

7. The device according to one of claims 1 to 6, **characterized in that** the reference signal is present specifically for at least one tube head type.

8. A method for the rotational alignment of a tube head relative to a tube body, in particular a method for operating the device according to one of claims 1 to 7, with the steps:

    - detecting a rotated position of the tube head relative to the tube body and
    - carrying out a relative rotation of the tube head to the tube body as a function of the detected rotated position,

    wherein the detecting of the rotated position encompasses the generating of an analog or digital detection signal corresponding to a rotating rotary movement of the tube head or tube body over a course of time corresponding to the rotating rotary movement,
    **characterized in that** the detection signal comprises quantified individual measured values and is correlated with a predetermined reference signal along the course of time
    and the rotated position is determined from a characteristic value describing the correlation, in particular maximum correlation or minimum correlation of the correlation, wherein the reference signal is generated by means of a reference body, preferably provided in a predetermined rotated position, and is stored electronically.

**Revendications**

1.  Dispositif pour l'orientation automatique par rotation d'un sommet de tube (16) par rapport à un corps de tube (14) de préférence fixe, avec des moyens de détection (18) pour détecter une position de rotation actuelle du sommet de tube ou corps de tube comportant un indicateur de position (21), et avec des moyens de positionnement (12, 20) coopérant avec les moyens de détection qui sont constitués pour activer un mouvement de rotation du sommet de tube ou du corps de tube en tant que réaction à un signal de commande d'une unité de commande (22), **caractérisé en ce que** les moyens de détection sont formés autour du périmètre du sommet de tube pour produire un signal de détection correspondant à un mouvement de rotation circulaire en fonction de la progression du temps du sommet de tube ou corps de tube en tant que valeurs de mesure individuelles quantifiées, et l'unité de commande comporte des moyens de corrélation (24) du signal de détection suivant la progression du temps avec un signal de référence et pour produire un signal de commande à partir d'une valeur caractéristique correspondant à un degré de corrélation, en particulier un maximum de corrélation ou un minimum de corrélation, pour les moyens de positionnement, et dans lequel les moyens de détection sont formés pour produire le signal de référence au moyen d'un corps de référence prévu dans une position de rotation prédéterminée, en particulier d'un sommet de tube de référence, et le signal de référence existe en tant qu'allure de signal prédéterminée sous une forme électroniquement mémorisée.

2.  Dispositif selon la revendication 1, **caractérisé en ce que** les moyens de détection comportent un détecteur agissant de façon optique ou capacitive et/ou un capteur à ultrasons et sont constitués pour produire le signal de détection sur une progression du temps correspondant au mouvement de rotation circulaire.

3.  Dispositif selon la revendication 1 ou 2, **caractérisé en ce que** les moyens de détection sont formés pour numériser et mémoriser successivement le signal de détection en tant que suite de signaux individuels quantifiés.

4.  Dispositif selon l'une quelconque des revendications 1 à 3, **caractérisé en ce que** les moyens de détection sont formés de telle sorte que suivant la progression du temps correspondant à un mouvement de rotation circulaire du sommet de tube, au moins 100, de préférence au moins 300, signaux individuels du signal de détection sont produits en tant que base pour la corrélation.

5.  Dispositif selon l'une quelconque des revendications 1 à 4, **caractérisé en ce que** les moyens de corrélation sont formés pour une détermination de préférence numérique d'une fonction de corrélation du signal de détection avec le signal de référence ainsi que pour une détermination d'une valeur caractéristique décrivant la corrélation, en particulier d'un maximum de fonction ou minimum de fonction, à partir de la fonction de corrélation.

6.  Dispositif selon la revendication 5, **caractérisé en ce que** l'unité de commande est constituée de telle sorte qu'une position du maximum de fonction ou du minimum de fonction détermine en fonction de la progression du temps le signal de commande pour le mouvement de rotation du sommet de tube ou corps de tube.

7.  Dispositif selon l'une quelconque des revendications 1 à 6, **caractérisé en ce que** le signal de référence est spécifique pour au moins un type de sommet de tube.

8.  Procédé pour l'orientation par rotation d'un sommet de tube par rapport à un corps de tube, en particulier procédé pour actionner le dispositif selon l'une quelconque des revendications 1 à 7, avec les étapes :

    - de détection d'une position de rotation du sommet de tube par rapport au corps de tube et
    - d'exécution d'une rotation relative du sommet de tube par rapport au corps de tube en fonction de la position de rotation détectée,

    dans lequel la détection de la position de rotation comporte la production d'un signal de détection analogique ou numérique correspondant à un mouvement de rotation circulaire du sommet de tube ou corps de tube sur une progression du temps correspondant au mouvement de rotation circulaire, **caractérisé en ce que** le signal de détection comprend des valeurs de mesures individuelles quantifiées et est corrélé avec un signal de référence prédéterminé suivant la progression du temps, et la position de rotation est déterminée à partir d'une valeur caractéristique décrivant la corrélation, en particulier un maximum de corrélation ou minimum de corrélation de la corrélation, le signal de référence étant produit au moyen d'un corps de référence prévu de préférence dans une position de rotation prédéterminée et mémorisé électroniquement.

**Fig. 1**

**Fig. 2**

# Fig. 3a

| X-Wert | Y-Wert |
|--------|--------|
| 1 | 5 |
| 2 | 9 |
| 3 | 5 |
| 4 | 2 |
| 5 | 2 |
| 6 | 3 |
| 7 | 4 |
| 8 | 4 |
| 9 | 4 |
| 10 | 4 |

# Fig. 3b

| X-Wert | Y-Wert |
|--------|--------|
| 1 | 2 |
| 2 | 3 |
| 3 | 4 |
| 4 | 4 |
| 5 | 4 |
| 6 | 4 |
| 7 | 5 |
| 8 | 9 |
| 9 | 5 |
| 10 | 2 |

# Fig. 4

| | |
|--------|--------|
| r(0) | 169 |
| r(1) | 174 |
| r(2) | 169 |
| r(3) | 163 |
| r(4) | 167 |
| r(5) | 190 |
| r(6) | 212 |
| r(7) | 190 |
| r(8) | 167 |
| r(9) | 163 |

**Fig. 5a**

| Zeit X-Wert | Messreihe 1 Y-Wert | Messreihe 2 Y-Wert | |
|---|---|---|---|
| 1 | 2 | 5 | |
| 2 | 3 | 9 | |
| 3 | 4 | 5 | |
| 4 | 4 | 2 | |
| 5 | 4 | | 6 |
| 6 | 4 | 3 | |
| 7 | 5 | 4 | |
| 8 | 9 | 4 | |
| 9 | 5 | | 10 |
| 10 | 2 | 4 | |

**Fig. 5b**

| Zeit X-Wert | Messreihe 1 Y-Wert | Messreihe 2 Y-Wert | |
|---|---|---|---|
| 1 | 2 | 5 | |
| 2 | 3 | 9 | |
| 3 | 4 | 5 | |
| 4 | 4 | | 10 |
| 5 | 4 | | 10 |
| 6 | 4 | 3 | |
| 7 | 5 | 4 | |
| 8 | 9 | | 10 |
| 9 | 5 | 4 | |
| 10 | 2 | | 10 |

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000327086 A